# DEMANDE DE BREVET EUROPEEN

(11) **EP 3 543 804 A1**
(43) Date de publication de la demande: **25.09.2019**
(21) Numéro de dépôt: 19164320.4
(22) Date de dépôt: 21.03.2019
(51) Int. Cl.: G05B 15/02, H05B 37/02, G08C 17/02, H04W 76/10, H04W 4/80, H04W 8/00

(54) **PROCÉDÉ DE PILOTAGE D'UN DISPOSITIF DOMOTIQUE**

(30) Priorité: 23.03.2018 FR 1852548
(71) Demandeur: Hager Controls, 67700 Saverne (FR)
(72) Inventeur: COURREGES, Stanis, 67330 KIRRWILLER (FR); FRICKER, Philippe, 67170 WINGERSHEIM LES QUATRE BANS (FR); PAILLARD, Jean-Noël, 67190 DINSHEIM-SUR-BRUCHE (FR)
(74) Mandataire: Cabinet Nuss

(57) **Abrégé**

L'invention a pour objet un système de détection de présence et/ou de mouvement (A), comportant un dispositif de détection et un dispositif d'actionnement déporté du dispositif de détection. Le dispositif de détection comprend un détecteur de présence et/ou de mouvement et une première unité de communication radiofréquence. Le dispositif d'actionnement comprend une unité d'actionnement et une deuxième unité de communication radiofréquence. L'unité d'actionnement est apte à actionner un dispositif domotique. La première unité de communication radiofréquence et la deuxième unité de communication radiofréquence sont aptes à établir un lien de communication de commandes domotiques entre elles. La première unité de communication radiofréquence est en outre apte à établir un lien de communication de configuration avec un dispositif mobile (M).

## Description

La présente invention relève du domaine de la domotique et a pour objet un système de détection de présence et/ou de mouvement. La présente invention a également pour objet procédé de pilotage d'un système de détection de présence et/ou de mouvement selon l'invention.

Des systèmes de détection de présence et/ou de mouvement comportant un dispositif de détection et un dispositif d'actionnement déporté du dispositif de détection sont connus de l'art antérieur. Le dispositif de détection de tels systèmes comprend en général un détecteur de présence et/ou de mouvement et une première unité de communication radiofréquence et le dispositif d'actionnement comprend en général une unité d'actionnement et une deuxième unité de communication radiofréquence. L'unité d'actionnement de tels systèmes est apte à actionner un dispositif domotique. Ce dispositif domotique peut être une source lumineuse, un thermostat d'un système de chauffage ou un moteur électrique actionnant une porte ou un portail, par exemple.

Afin de pouvoir transmettre des commandes domotiques depuis le dispositif de détection vers le dispositif d'actionnement, la première unité de communication radiofréquence et la deuxième unité de communication radiofréquence sont aptes à établir un lien de communication de commandes domotiques entre elles.

Dans les systèmes de détection de présence et/ou de mouvement connus de l'art antérieur, la configuration du dispositif de détection s'effectue à l'aide d'interfaces utilisateurs présents sur le dispositif de détection, tels que des boutons et des voyants lumineux. De tels dispositifs de détection présentent comme désavantage d'être coûteux et difficiles dans leur maniement.

La présente invention a pour but de pallier ces inconvénients et de proposer un système de détection moins coûteux et présentant un maniement facile.

À cet effet, la présente invention a pour objet un système de détection de présence et/ou de mouvement, comportant un dispositif de détection et un dispositif d'actionnement déporté du dispositif de détection. Le dispositif de détection comprend un détecteur de présence et/ou de mouvement et une première unité de communication radiofréquence. Le dispositif d'actionnement comprend une unité d'actionnement et une deuxième unité de communication radiofréquence, l'unité d'actionnement étant apte à actionner un dispositif domotique. La première unité de communication radiofréquence et la deuxième unité de communication radiofréquence sont aptes à établir un lien de communication de commandes domotiques entre elles.

Le système de détection de présence et/ou de mouvement est caractérisé en ce que la première unité de communication radiofréquence est en outre apte à établir un lien de communication de configuration avec un dispositif mobile.

Ainsi, le système de détection peut être aisément configuré à partir du dispositif mobile et à travers le lien de communication de configuration par un individu. La configuration du système de détection peut comprendre un paramétrage du système de détection, un appairage du système de détection avec un autre dispositif domotique et/ou un envoi de commandes vers le système de détection. Le paramétrage peut comprendre la définition d'un angle de détection, de caractères de luminosité de la source lumineuse et/ou de la durée d'actionnement de la source lumineuse, par exemple. L'appairage permet de lier fonctionnellement le système de détection à l'autre dispositif domotique. L'envoi de commandes vers le système de détection peut par exemple permettre à l'individu de tester le fonctionnement de la source lumineuse par une activation manuelle de cette dernière.

Selon une possibilité, le dispositif de détection est autonome en alimentation en énergie, le dispositif de détection comprenant un dispositif d'alimentation en énergie, de préférence au moins une pile électrique et/ou un pack de piles électriques.

Ainsi, le dispositif de détection peut être indépendant d'une alimentation en secteur. En conséquence, son installation peut être rendue plus facile.

Selon une caractéristique additionnelle possible, la première unité de communication radiofréquence comprend un module de communication domotique apte à établir le lien de communication de commandes domotiques avec la deuxième unité de communication radiofréquence et un module de communication mobile apte à établir le lien de communication de configuration avec le dispositif mobile.

Selon une possibilité, le module de communication mobile est un module de communication Bluetooth, de préférence un module Bluetooth à basse consommation, et/ou le module de communication domotique est un module de communication KNX.

Ainsi, le lien de communication de configuration peut être établi avec une variété de dispositifs mobiles, tels que des tablettes informatiques ou des téléphones intelligents (smartphones), et la consommation en énergie du dispositif de détection peut être réduite.

L'invention a également pour objet un procédé de pilotage d'un système de détection de présence et/ou de mouvement selon l'invention, procédé de pilotage caractérisé en ce qu'il comprend l'étape suivante :
établir un lien de communication de configuration entre la première unité de communication radiofréquence et le dispositif mobile.

Ainsi, le système de détection peut être aisément configuré à partir du dispositif mobile et à travers le lien de communication de configuration par un individu.

Selon une possibilité, le lien de communication de configuration est un lien de communication Bluetooth, de préférence un lien de communication Bluetooth à basse consommation.

Selon une caractéristique additionnelle possible, le procédé comprend en outre l'étape suivante :
établir un lien de communication de commandes domotiques entre la première unité de communication radiofréquence et la deuxième unité de communication radiofréquence, de préférence entre le module de communication domotique et la deuxième unité de communication radiofréquence.

Selon une possibilité, le procédé comprend en outre les étapes suivantes :
mettre le détecteur de présence et/ou de mouvement dans un mode de détection dans lequel il est apte à détecter la présence et/ou le mouvement d'un individu dans une zone de détection située à proximité du dispositif de détection,
mettre le module de communication mobile dans un mode veille,
procédé de pilotage caractérisé par l'étape suivante
mettre le module de communication mobile dans un mode de signalisation lorsque le détecteur de présence et/ou de mouvement détecte la présence et/ou le mouvement de l'individu dans la zone de détection.

Le procédé de pilotage du système de détection de présence et/ou de mouvement présente comme avantage de réduire la consommation en énergie du dispositif de détection, puisque le module de communication mobile reste dans le mode veille tant qu'aucun individu n'est présent dans la zone de détection, c'est-à-dire à proximité du détecteur de présence et/ou de mouvement. Ainsi, le dispositif de détection passe d'un état à consommation initiale faible et constante, dans lequel le module de communication mobile ne consomme pas d'énergie liée à l'émission de signaux radio, afin de passer pendant une relativement courte durée à un état de consommation plus élevée, pendant lequel le module de communication mobile émet des signaux radio. À l'aide du procédé selon l'invention, la consommation en énergie totale du système de détection peut être réduite de 25% à 50%. Le procédé de pilotage selon l'invention est donc particulièrement avantageux lorsque le dispositif détection est alimenté par au moins une pile et/ou un pack de piles, pour lequel cela signifie un gain en durée de vie de la ou des pile(s) et/ou du pack de piles de l'ordre de 25 % à 50 %.

Selon une possibilité, le lien de communication de configuration est uniquement établi suite au mode de signalisation.

Selon une caractéristique additionnelle possible, le procédé de pilotage du système de détection peut permettre une configuration, un paramétrage et/ou une commande du système de détection à l'aide du dispositif mobile, et/ou l'appairage du dispositif domotique avec un autre dispositif à l'aide du dispositif mobile, en établissant un lien de communication de configuration entre le module de communication mobile et le dispositif mobile.

Selon une possibilité, le module de communication mobile est mis dans le mode de signalisation uniquement lorsque le détecteur de présence et/ou de mouvement détecte la présence et/ou le mouvement de l'individu à proximité du détecteur de présence et/ou de mouvement.

Selon une caractéristique additionnelle possible, le mode de signalisation comprend un premier mode de signalisation optimisée, dans lequel le module de communication mobile émet à répétition régulière une balise de signalisation, le module de communication mobile étant mis dans le premier mode de signalisation optimisée pendant un premier laps de temps prédéterminé après la détection de la présence et/ou du mouvement de l'individu à proximité du détecteur de présence et/ou de mouvement.

Ainsi, la réactivité du système de détection peut-être accrue.

Selon une possibilité, dans le premier mode de signalisation optimisée, la fréquence d'émission de la balise de signalisation peut être comprise entre 100 ms et 1 s, de préférence valoir environ 250 ms.

Selon une caractéristique additionnelle possible, le premier laps de temps peut correspondre à une durée comprise entre 500 ms et 2 s, de préférence environ 750 ms.

Selon une possibilité, le mode de signalisation comprend en outre un deuxième mode de signalisation, dans lequel le module de communication mobile émet à répétition régulière la balise de signalisation pendant un deuxième laps de temps de préférence suite à l'écoulement du premier laps de temps.

Selon une caractéristique additionnelle possible, dans le deuxième mode de signalisation, la fréquence d'émission de la balise de signalisation peut être comprise entre 5 secondes et 15 secondes, par exemple.

Selon une possibilité, le deuxième laps de temps peut correspondre à une durée comprise entre 10 et 60 secondes, de préférence environ 30 secondes.

Selon une caractéristique additionnelle possible, dans le premier mode de signalisation optimisée, le module de communication mobile émet un nombre prédéterminé de balises de signalisation, de préférence trois balises de signalisation.

Selon une possibilité, la balise de signalisation comprend un identifiant du système de détection.

Ainsi, le dispositif mobile est capable d'identifier le système de détection en vue d'établir le lien de communication de configuration.

Selon une caractéristique additionnelle possible, le procédé comprend en outre l'étape suivante :
mettre le module de communication mobile dans le mode veille après l'écoulement d'un premier intervalle de temps, pendant lequel le module de communication mobile opère dans le mode de signalisation et pendant lequel aucun lien de communication de configuration n'a été établi.

Ainsi, la consommation en énergie du système de détection peut être davantage réduite.

Selon une possibilité, le procédé comprend en outre l'étape suivante :
établir le lien de communication de configuration entre le module de communication mobile et le dispositif mobile lorsque, dans le mode de signalisation, le module de communication mobile détecte un signal à provenance du dispositif mobile.

Ainsi, un lien de communication de configuration peut être établi pour permettre une configuration facile du système de détection pour un utilisateur. Dans le cas où le lien de communication de configuration est un lien de communication Bluetooth basse consommation, la configuration du système de détection peut être aisément effectuée à l'aide d'un dispositif souvent déjà détenu par l'individu, tel qu'un téléphone intelligent ou smartphone par exemple.

Selon une caractéristique additionnelle possible, le procédé comprend en outre l'étape suivante :
mise hors fonctionnement du détecteur de présence et/ou de mouvement pendant que le lien de communication de configuration entre le module de communication mobile et le dispositif mobile subsiste.

Ainsi, la consommation d'énergie du système de détection peut être réduite pendant que le lien de communication de configuration subsiste, par exemple lorsqu'un installateur configure le système de détection à l'aide du dispositif mobile.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 représente la consommation en énergie d'un système de détection piloté à l'aide d'un procédé de pilotage selon le mode de réalisation ;

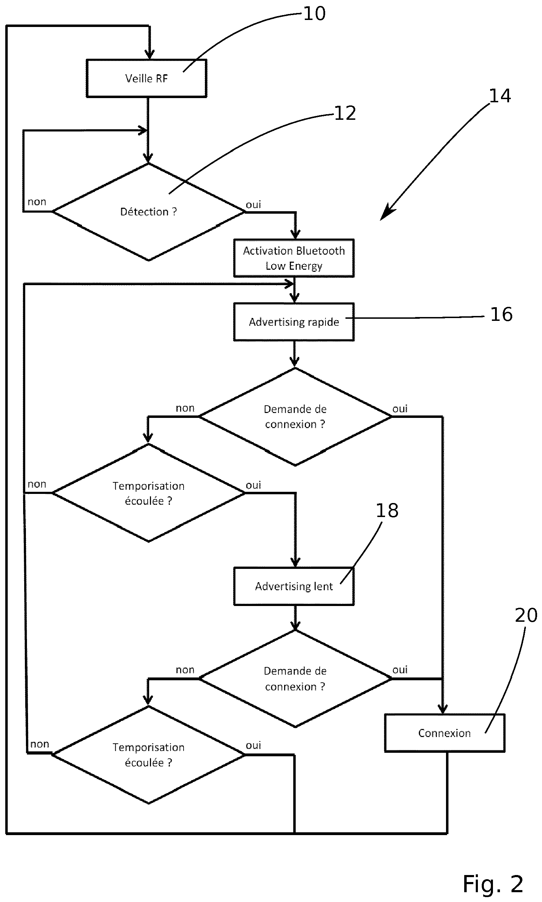

la figure 2 est une représentation graphique des étapes du procédé de pilotage selon le mode de réalisation.

La demande a pour objet un système de détection A de présence et/ou de mouvement, comportant un dispositif de détection et un dispositif d'actionnement déporté du dispositif de détection. Le dispositif de détection comprend un détecteur de présence et/ou de mouvement et une première unité de communication radiofréquence. Le dispositif d'actionnement comprend une unité d'actionnement et une deuxième unité de communication radiofréquence, l'unité d'actionnement étant apte à actionner un dispositif domotique. La première unité de communication radiofréquence et la deuxième unité de communication radiofréquence sont aptes à établir un lien de communication de commandes domotiques entre elles.

La première unité de communication radiofréquence est en outre apte à établir un lien de communication de configuration avec un dispositif mobile M.

Ainsi, le système de détection A peut être aisément configuré à partir du dispositif mobile M et à travers le lien de communication de configuration par un individu I. La configuration du système de détection A peut comprendre un paramétrage du système de détection A, un appairage du système de détection A avec un autre dispositif domotique et/ou un envoi de commandes vers le système de détection A. Le paramétrage peut comprendre la définition d'un angle de détection, de caractères de luminosité de la source lumineuse et/ou de la durée d'actionnement de la source lumineuse, par exemple. L'appairage permet de lier fonctionnellement le système de détection A à l'autre dispositif domotique. L'envoi de commandes vers le système de détection A peut par exemple permettre à l'individu de tester le fonctionnement de la source lumineuse par une activation manuelle de cette dernière.

Selon une possibilité, le dispositif de détection est autonome en alimentation en énergie, le dispositif de détection comprenant un dispositif d'alimentation en énergie, de préférence au moins une pile électrique et/ou un pack de piles électriques.

Ainsi, le dispositif de détection peut être indépendant d'une alimentation en secteur. En conséquence, son installation peut être rendue plus facile.

Selon une caractéristique additionnelle possible, la première unité de communication radiofréquence comprend un module de communication domotique apte à établir le lien de communication de commandes domotiques avec la deuxième unité de communication radiofréquence et un module de communication mobile apte à établir le lien de communication de configuration avec le dispositif mobile M.

Selon une possibilité, le module de communication mobile est un module de communication Bluetooth, de préférence un module Bluetooth à basse consommation, et/ou en ce que le module de communication domotique est un module de communication KNX.

Ainsi, le lien de communication de configuration peut être établi avec une variété de dispositifs mobiles, tels que des tablettes informatiques ou des téléphones intelligents (smartphones), et la consommation en énergie du dispositif de détection peut être réduite.

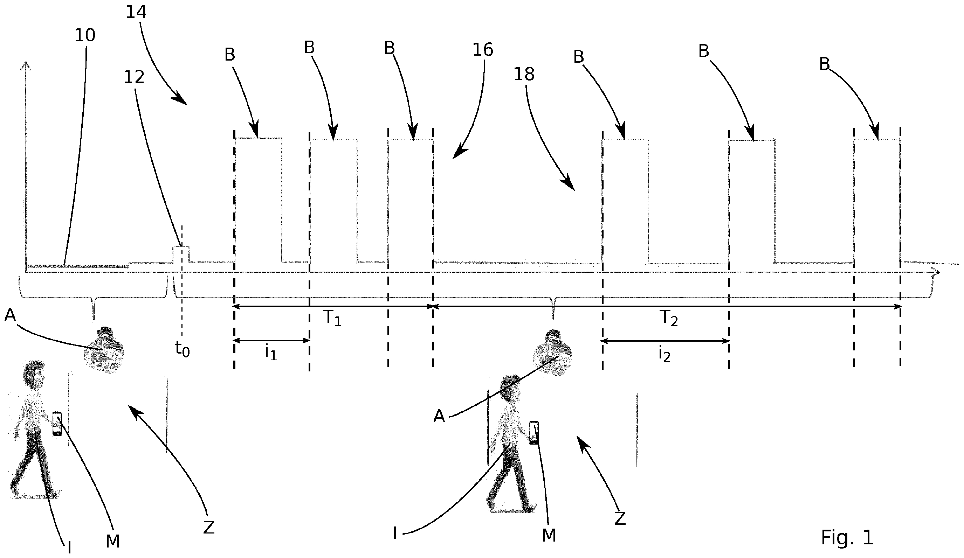

La demande a également pour objet un procédé de pilotage d'un système de détection selon le mode de réalisation. La figure 1 représente la consommation en énergie du système de détection A piloté à l'aide dudit procédé de pilotage. Le procédé de pilotage comprend l'étape suivante :
établir un lien de communication de configuration entre la première unité de communication radiofréquence et le dispositif mobile M.

Ainsi, le système de détection A peut être aisément configuré à partir du dispositif mobile M et à travers le lien de communication de configuration par l'individu I.

Selon une possibilité, le lien de communication de configuration est un lien de communication Bluetooth, de préférence un lien de communication Bluetooth à basse consommation.

Selon une caractéristique additionnelle possible, le procédé comprend en outre l'étape suivante :
établir un lien de communication de commandes domotiques entre la première unité de communication radiofréquence et la deuxième unité de communication radiofréquence, de préférence entre le module de communication domotique et la deuxième unité de communication radiofréquence. Cette étape peut être effectuée avant, après ou pendant l'établissement du lien de communication de configuration.

Selon une caractéristique additionnelle possible, le procédé de pilotage comprend en outre les étapes suivantes :
mettre le détecteur de présence et/ou de mouvement dans un mode de détection dans lequel il est apte à détecter la présence et/ou le mouvement d'un individu I dans une zone de détection Z située à proximité du système de détection,
mettre le module de communication mobile dans un mode veille 10 ;
mettre le module de communication mobile dans un mode de signalisation 14 lorsque le détecteur de présence et/ou de mouvement détecte 12 la présence et/ou le mouvement de l'individu I dans la zone de détection.

Le mode veille 10 du module de communication mobile peut également être nommé mode standby.

Le dispositif mobile M est apte à communiquer par radiofréquence. Le module de communication mobile peut être un module Bluetooth, de préférence un module Bluetooth à basse consommation, également nommée Bluetooth Low Energy (BLE). Dans le cas où le module de communication mobile est un module Bluetooth, le mode veille 10 du module Bluetooth peut également être nommé mode standby BLE advertising.

Selon une caractéristique additionnelle possible, le procédé de pilotage du système de détection A selon le mode de réalisation peut permettre la configuration du système de détection A à l'aide du dispositif mobile M, en établissant 20 un lien de communication de configuration entre le module de communication mobile et le dispositif mobile M.

Le mode de signalisation 14 peut également être nommé mode advertising.

Selon une possibilité, le module de communication mobile est mis dans le mode de signalisation 14 uniquement lorsque le détecteur de présence et/ou de mouvement détecte 12 la présence et/ou le mouvement de l'individu I à proximité du détecteur de présence et/ou de mouvement.

La détection de la présence de l'individu I à proximité du détecteur de présence et/ou de mouvement intervient à l'instant t₀.

Selon une caractéristique additionnelle possible, le mode de signalisation 14 peut comprendre un premier mode de signalisation optimisée 16, dans lequel le module de communication mobile émet à répétition régulière une balise de signalisation B.

Le module de communication mobile peut être mis dans le premier mode de signalisation optimisée 16 pendant un premier laps de temps T₁ prédéterminé après la détection de la présence et/ou du mouvement de l'individu I dans la zone de détection Z.

La balise de signalisation B peut être émise pendant une durée prédéterminée constante.

Comme il ressort de la figure 1, dans le premier mode de signalisation optimisée 16, l'intervalle de temps i₁ entre deux balises de signalisation B consécutives peut être compris entre 100 ms et 1 s, de préférence valoir environ 250 ms.

Selon une caractéristique additionnelle possible, le premier laps de temps T₁ peut correspondre à une durée comprise entre 500 ms et 2 s, de préférence environ 750 ms.

Selon une possibilité, le mode de signalisation comprend en outre un deuxième mode de signalisation 18, dans lequel le module de communication mobile émet à répétition régulière la balise de signalisation B pendant un deuxième laps de temps T₂ de préférence suite à l'écoulement du premier laps de temps T₁.

Comme il ressort de la figure 1, selon une caractéristique additionnelle possible, dans le deuxième mode de signalisation, l'intervalle i₂ de temps entre deux balises de signalisation B consécutives peut être compris entre 5 secondes et 15 secondes, par exemple.

Selon une possibilité, le deuxième laps de temps T₂ peut correspondre à une durée comprise entre 10 et 60 secondes, de préférence environ 30 secondes.

Selon une caractéristique additionnelle possible, dans le premier mode de signalisation optimisée 16, le module de communication mobile émet un nombre prédéterminé de balises de signalisation B, de préférence trois balises de signalisation B.

Selon une possibilité, la balise de signalisation B comprend un identifiant du système de détection A.

Ainsi, le dispositif mobile M est capable d'identifier le système de détection A en vue d'établir le lien de communication de configuration avec ce dernier.

Selon une caractéristique additionnelle possible, le procédé comprend en outre l'étape suivante :
mettre le module de communication mobile dans le mode veille 10 après l'écoulement d'un premier intervalle de temps, pendant lequel le module de communication mobile opère dans le mode de signalisation 14 et pendant lequel aucun lien de communication de configuration n'a été établi.

Ainsi, la consommation en énergie du système de détection A peut être davantage réduite.

Selon une possibilité, le procédé comprend en outre l'étape suivante :
établir 20 un lien de communication de configuration entre le module de communication mobile et le dispositif mobile M lorsque, dans le mode de signalisation, le module de communication mobile détecte un signal à provenance du dispositif mobile M.

Ainsi, un lien de communication de configuration peut être établi pour permettre la configuration du système de détection A à l'aide du dispositif mobile M.

Selon une caractéristique additionnelle possible, le procédé comprend en outre l'étape suivante :
mise hors fonctionnement du détecteur de présence et/ou de mouvement pendant que le lien de communication de configuration entre le module de communication mobile et le dispositif mobile M subsiste.

Ainsi, la consommation d'énergie du système de détection A peut être réduite pendant que le lien de communication de configuration subsiste, par exemple lorsque l'individu I configure le système de détection A à l'aide du dispositif mobile M.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Système de détection de présence et/ou de mouvement (A), comportant un dispositif de détection et un dispositif d'actionnement déporté du dispositif de détection,
le dispositif de détection comprenant un détecteur de présence et/ou de mouvement et une première unité de communication radiofréquence,
le dispositif d'actionnement comprenant une unité d'actionnement et une deuxième unité de communication radiofréquence,
l'unité d'actionnement étant apte à actionner un dispositif domotique,
la première unité de communication radiofréquence et la deuxième unité de communication radiofréquence étant aptes à établir un lien de communication de commandes domotiques entre elles,
**caractérisé en ce que** la première unité de communication radiofréquence est en outre apte à établir un lien de communication de configuration avec un dispositif mobile (M).

2. Système de détection de présence et/ou de mouvement selon la revendication précédente, **caractérisé en ce que** le dispositif de détection est autonome en alimentation en énergie, le dispositif de détection comprenant un dispositif d'alimentation en énergie, de préférence au moins une pile électrique et/ou un pack de piles électriques.

3. Système de détection de présence et/ou de mouvement selon l'une quelconque des revendications précédentes, **caractérisé en ce que** la première unité de communication radiofréquence comprend un module de communication domotique apte à établir le lien de communication de commandes domotiques avec la deuxième unité de communication radiofréquence et un module de communication mobile apte à établir le lien de communication de configuration avec le dispositif mobile (M).

4. Système de détection de présence et/ou de mouvement selon la revendication précédente, **caractérisé en ce que** le module de communication mobile est un module de communication Bluetooth, de préférence un module Bluetooth à basse consommation, et/ou **en ce que** le module de communication domotique est un module de communication KNX.

5. Procédé de pilotage d'un système de détection de présence et/ou de mouvement (A) selon l'une quelconque des revendications précédentes, procédé de pilotage **caractérisé en ce qu'**il comprend l'étape suivante :
établir (20) un lien de communication de configuration entre la première unité de communication radiofréquence et le dispositif mobile (M).

6. Procédé de pilotage selon la revendication précédente, **caractérisé en ce que** le lien de communication de configuration est un lien de communication Bluetooth, de préférence un lien de communication Bluetooth à basse consommation.

7. Procédé de pilotage selon l'une quelconque des revendications 5 ou 6, **caractérisé en ce qu'**il comprend en outre l'étape suivante :
établir un lien de communication de commandes domotiques entre la première unité de communication radiofréquence et la deuxième unité de communication radiofréquence, de préférence entre le module de communication domotique et la deuxième unité de communication radiofréquence.

8. Procédé de pilotage selon l'une quelconque des revendications 5 à 7, le système de détection de présence et/ou de mouvement étant un système de détection de présence et/ou de mouvement selon l'une quelconque des revendications 3 ou 4, procédé **caractérisé en ce qu'**il comprend en outre les étapes suivantes :
mettre le détecteur de présence et/ou de mouvement dans un mode de détection dans lequel il est apte à détecter la présence et/ou le mouvement d'un individu (I) dans une zone de détection (Z) située à proximité du dispositif de détection,
mettre le module de communication mobile dans un mode veille (10),
mettre le module de communication mobile dans un mode de signalisation (14) lorsque le détecteur de présence et/ou de mouvement détecte (12) la présence et/ou le mouvement de l'individu (I) dans la zone de détection (Z).

9. Procédé de pilotage selon la revendication précédente, **caractérisé en ce que** le mode de signalisation (14) comprend un premier mode de signalisation optimisée (16), dans lequel le module de communication mobile émet à répétition régulière une balise de signalisation (B),
et **en ce que**
le module de communication mobile est mis dans le premier mode de signalisation optimisée (16) pendant un premier laps de temps (T₁) prédéterminé après la détection de la présence et/ou du mouvement de l'individu (I) dans la zone de détection (Z).

10. Procédé de pilotage selon la revendication précédente, **caractérisé en ce que** le mode de signalisation comprend en outre un deuxième mode de signalisation (18), dans lequel le module de communication mobile émet à répétition régulière la balise de signalisation (B) pendant un deuxième laps de temps (T₂) de préférence suite à l'écoulement du premier laps de temps (T₁).

11. Procédé de pilotage selon l'une quelconque des revendications 9 ou 10, **caractérisé en ce que**, dans le premier mode de signalisation optimisée (18), le module de communication mobile émet un nombre prédéterminé de balises signalisation (B), de préférence trois balises de signalisation (B).

12. Procédé de pilotage selon l'une quelconque des revendications 9 à 11, **caractérisé en ce que** la balise de signalisation (B) comprend un identifiant du système de détection (A).

13. Procédé de pilotage selon l'une quelconque des revendications 8 à 12, **caractérisé en ce qu'**il comprend en outre l'étape suivante :
mettre le module de communication mobile dans le mode veille (10) après l'écoulement d'un premier intervalle de temps, pendant lequel le module de communication mobile opère dans le mode de signalisation (14) et pendant lequel aucun lien de communication de configuration n'a été établi.

14. Procédé de pilotage selon l'une quelconque des revendications 8 à 13, **caractérisé en ce que** le lien de communication de configuration est uniquement établi lorsque, dans le mode de signalisation (14), le module de communication mobile détecte un signal à provenance du dispositif mobile (M).

15. Procédé de pilotage selon la revendication précédente, **caractérisé par** l'étape supplémentaire suivante :
mise hors fonctionnement du détecteur de présence et/ou de mouvement pendant que le lien de communication de configuration subsiste.
